# EUROPEAN PATENT APPLICATION

(11) **EP 3 756 977 A1**
(43) Date of publication of application: **30.12.2020**
(21) Application number: 20181413.4
(22) Date of filing: 22.06.2020
(51) Int. Cl.: B62D 6/00, B62D 5/04

(54) **STEERING DEVICE**

(30) Priority: 24.06.2019 JP 2019116681
(71) Applicant: JTEKT CORPORATION, Chuo-ku, Osaka-shi, Osaka 542-8502 (JP)
(72) Inventor: HIGASHI, Masayasu, Osaka-shi,, Osaka 542-8502 (JP); MIKI, Daisuke, Osaka-shi,, Osaka 542-8502 (JP); FUCHS, Robert, Osaka-shi,, Osaka 542-8502 (JP)
(74) Representative: Winter, Brandl, Fürniss, Hübner, Röss, Kaiser, Polte - Partnerschaft mbB

(57) **Abstract**

A steering device (1) includes an electric motor (18) and an electronic control unit (12) controls the electric motor (18). The electronic control unit (12) includes a first friction torque computation circuit (44), a second friction torque computation circuit (48; 48A), a first load torque-column angle estimation circuit (43), a pinion angle estimation circuit (45), a second load torque estimation circuit, and an axial force estimation circuit. The first friction torque computation circuit (44) computes first friction torque. The second friction torque computation circuit (48; 48A) computes second friction torque. The first load torque-column angle estimation circuit (43) estimates first load torque and a column angle. The pinion angle estimation circuit (45) estimates an estimated pinion angle value. The second load torque estimation circuit estimates second load torque. The axial force estimation circuit estimates an axial force that acts on a rack shaft (14).

## Description

### BACKGROUND OF THE INVENTION

### 1. Field of the Invention

The present invention relates to a steering device.

### 2. Description of Related Art

There has been developed a technique of estimating a road surface reaction force or a rack axial force using a signal from a sensor mounted on an electric power steering system (EPS) or a vehicle in order to improve steering performance by transferring road surface information to a driver in assist torque control for the EPS or reaction force torque control for a steer-by-wire system. Japanese Patent Application Publication No. 2017-226318 (JP 2017-226318 A), for example, discloses a technique of estimating a rack axial force using information (motor current, motor angle, and steering torque) from a sensor mounted on an EPS and information (vehicle speed) from a sensor mounted on a vehicle.

### SUMMARY OF THE INVENTION

With the technique described in JP 2017-226318 A, friction torque cannot be estimated with precision, and therefore the precision in estimating a rack axial force may be lowered in accordance with the state of a road surface or tires. The present invention allows precise estimation of the rack axial force.

An aspect of the present invention provides a steering device. The steering device includes: a steering member; a rack shaft configured to turn turning wheels through axial movement of the rack shaft; a steering torque detector configured to detect steering torque that acts on the steering member; a column shaft coupled to the steering member; a pinion shaft that constitutes a rack-and-pinion mechanism together with the rack shaft; an intermediate shaft that couples the column shaft and the pinion shaft to each other; an electric motor; a speed reducer configured to output rotation of the electric motor to the column shaft at a reduced rotational speed; an angle detector configured to detect a rotational angle of the electric motor; a current detector configured to detect a motor current that flows through the electric motor; and an electronic control unit configured to control the electric motor. The electronic control unit includes a first friction torque computation circuit, a second friction torque computation circuit, a first load torque-column angle estimation circuit, a pinion angle estimation circuit, a second load torque estimation circuit, and an axial force estimation circuit. The first friction torque computation circuit is configured to compute first friction torque that is friction torque generated in the speed reducer. The second friction torque computation circuit is configured to compute second friction torque that is friction torque generated in the rack-and-pinion mechanism. The first load torque-column angle estimation circuit is configured to estimate first load torque that is load torque generated in the speed reducer, and a column angle that is a rotational angle of the column shaft, based on the steering torque, the motor current, the first friction torque, and the rotational angle of the electric motor. The pinion angle estimation circuit is configured to estimate an estimated pinion angle value that is an estimated value of a rotational angle of the pinion shaft, based on the first load torque, an estimated value of the column angle, and a rigidity coefficient of the intermediate shaft. The second load torque estimation circuit is configured to estimate second load torque that is load torque generated in the rack-and-pinion mechanism, based on the first load torque, the second friction torque, and the estimated pinion angle value. The axial force estimation circuit is configured to estimate an axial force that acts on the rack shaft, based on the second load torque.

With the configuration described above, the first friction torque computation circuit is provided, and thus the first friction torque that is generated in the speed reducer can be estimated with precision. With the configuration described above, in addition, the second friction torque computation circuit is provided, and thus the second friction torque that is generated in the rack-and-pinion mechanism can be estimated with precision. Consequently, the rack axial force can be estimated with precision.

In the steering device, the first friction torque computation circuit may include: a first slip speed computation circuit configured to compute a first slip speed that is a slip speed of the speed reducer; a first friction coefficient computation circuit configured to compute a first friction coefficient that is a friction coefficient of the speed reducer, based on the first slip speed; a first force computation circuit configured to compute a first tooth surface normal force that is a tooth surface normal force of the speed reducer; and a first torque computation circuit configured to compute the first friction torque using the first friction coefficient and the first tooth surface normal force.

In the steering device, the first force computation circuit may include: a first one-point contact force computation circuit configured to compute a first one-point contact tooth surface normal force that is a tooth surface normal force of the speed reducer in a one-point contact state, based on the motor current, the steering torque, and the column angle; a first two-point contact force computation circuit configured to compute a first two-point contact tooth surface normal force that is a tooth surface normal force of the speed reducer in a two-point contact state; and a first maximum value selection circuit configured to select one of the first one-point contact tooth surface normal force and the first two-point contact tooth surface normal force, an absolute value of which is larger, as the first tooth surface normal force.

In the steering device, the second friction torque computation circuit may include: a second slip speed computation circuit configured to compute a second slip speed that is a slip speed of the rack-and-pinion mechanism; a second friction coefficient computation circuit configured to compute a second friction coefficient that is a friction coefficient of the rack-and-pinion mechanism, based on the second slip speed; a second force computation circuit configured to compute a second tooth surface normal force that is a tooth surface normal force of the rack-and-pinion mechanism; and a second torque computation circuit configured to compute the second friction torque using the second friction coefficient and the second tooth surface normal force.

In the steering device, the second force computation circuit may include: a second one-point contact force computation circuit configured to compute a second one-point contact tooth surface normal force that is a tooth surface normal force of the rack-and-pinion mechanism in a one-point contact state, based on the first load torque and the second load torque; a second two-point contact force computation circuit configured to compute a second two-point contact tooth surface normal force that is a tooth surface normal force of the rack-and-pinion mechanism in a two-point contact state; and a second maximum value selection circuit configured to select one of the second one-point contact tooth surface normal force and the second two-point contact tooth surface normal force, an absolute value of which is larger, as the second tooth surface normal force.

In the steering device, the second friction torque computation circuit may include: a second slip speed computation circuit configured to compute a second slip speed that is a slip speed of the rack-and-pinion mechanism; a second friction coefficient computation circuit configured to compute a second friction coefficient that is a friction coefficient of the rack-and-pinion mechanism, based on the second slip speed; a second force computation circuit configured to compute a second tooth surface normal force that is a tooth surface normal force of the rack-and-pinion mechanism, based on the first tooth surface normal force; and a second torque computation circuit configured to compute the second friction torque using the second friction coefficient and the second tooth surface normal force.

In the steering device, the second friction torque computation circuit may include: a third slip speed computation circuit configured to compute a third slip speed that is a slip speed of the rack-and-pinion mechanism; a friction coefficient computation circuit configured to compute a third friction coefficient that is a friction coefficient of the rack-and-pinion mechanism, based on the third slip speed; a one-point contact force correction circuit configured to compute a third one-point contact tooth surface normal force that is a tooth surface normal force of the rack-and-pinion mechanism in a one-point contact state, by correcting the first one-point contact tooth surface normal force; a two-point contact force correction circuit configured to compute a third two-point contact tooth surface normal force that is a tooth surface normal force of the rack-and-pinion mechanism in a two-point contact state, by correcting the first two-point contact tooth surface normal force; a third maximum value selection circuit configured to select one of the third one-point contact tooth surface normal force and the third two-point contact tooth surface normal force, an absolute value of which is larger, as a third tooth surface normal force that is a tooth surface normal force of the rack-and-pinion mechanism; and a third torque computation circuit configured to compute the second friction torque using the third friction coefficient and the third tooth surface normal force.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating a schematic configuration of an electric power steering system to which a steering device according to an embodiment of the present invention is applied;
FIG. 2 is a block diagram illustrating the electric configuration of an ECU;
FIG. 3 is a block diagram illustrating the electric configuration of a rack axial force estimation circuit;
FIG. 4 is a schematic diagram illustrating a two-inertia model of the electric power steering system;
FIG. 5 is a block diagram illustrating the configuration of a first observer;
FIG. 6 is a block diagram illustrating the configuration of a second observer;
FIG. 7 is a block diagram illustrating the configuration of a first friction torque estimation circuit;
FIG. 8 is a schematic diagram illustrating a model of meshing between a worm wheel and a worm gear;
FIG. 9 is a block diagram illustrating the configuration of a second friction torque estimation circuit;
FIG. 10 is a schematic diagram illustrating a model of meshing between a rack and a pinion;
FIG. 11 is a graph illustrating the presence of correlation between friction torque of meshing between the worm wheel and the worm gear and friction torque of meshing between the rack and the pinion; and
FIG. 12 is a block diagram illustrating the configuration of the first friction torque computation circuit and a second friction torque computation circuit according to a modification.

### DETAILED DESCRIPTION OF EMBODIMENTS

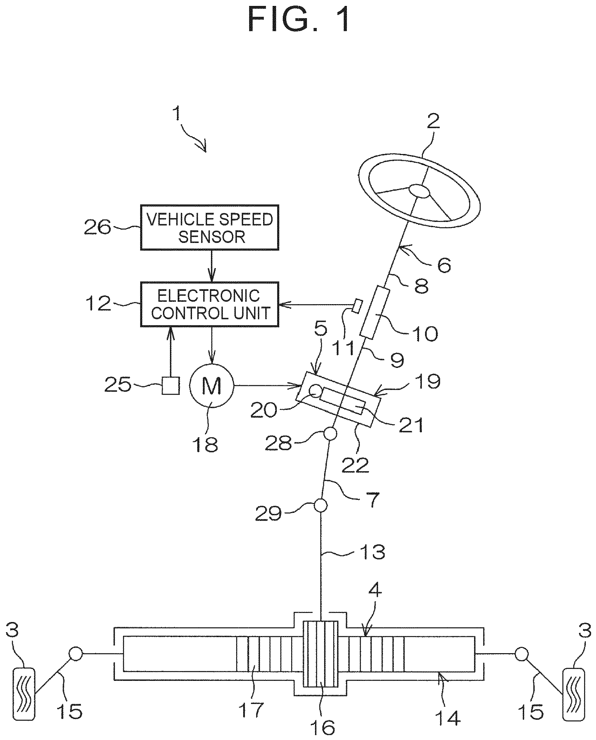

An embodiment of the present invention will be described in detail below with reference to the accompanying drawings. FIG. 1 is a schematic diagram illustrating a schematic configuration of an electric power steering system to which a steering device according to an embodiment of the present invention is applied. An electric power steering device (steering device) 1 is a column assist-type electric power steering device (hereinafter referred to as a "column-type EPS") in which an electric motor and a speed reducer are disposed in a column portion.

The column-type EPS 1 includes a steering wheel 2 that serves as a steering member used to steer a vehicle, a steering mechanism 4 that operates in conjunction with rotation of the steering wheel 2 to turn turning wheels 3, and a steering assist mechanism 5 that assists a driver in steering. The steering wheel 2 and the steering mechanism 4 are mechanically coupled to each other via a steering shaft 6, a first universal joint 28, an intermediate shaft 7, and a second universal joint 29.

The steering shaft 6 includes a first shaft 8 coupled to the steering wheel 2, and a second shaft 9 coupled to the intermediate shaft 7 via the first universal joint 28. The first shaft 8 and the second shaft 9 are coupled to each other so as to be relatively rotatable via a torsion bar 10. The second shaft 9 is an example of the "column shaft" according to the present invention. A torque sensor 11 is provided around the steering shaft 6. The torque sensor 11 detects torsion bar torque T_{tb}, which is applied to the torsion bar 10, based on the amount of relative rotational displacement between the first shaft 8 and the second shaft 9. The torsion bar torque T_{tb} which is detected by the torque sensor 11 is input to an electronic control unit (ECU) 12. The torque sensor 11 is an example of the "steering torque detector" according to the present invention. In this embodiment, the torsion bar torque T_{tb} is an example of the "steering torque" according to the present invention.

The steering mechanism 4 is composed of a rack-and-pinion mechanism that includes a pinion shaft 13 and a rack shaft 14 that serves as a steered shaft. The turning wheels 3 are coupled to respective end portions of the rack shaft 14 via tie rods 15 and knuckle arms (not illustrated). The pinion shaft 13 is coupled to the intermediate shaft 7 via the second universal joint 29. A pinion 16 is coupled to the distal end of the pinion shaft 13.

The rack shaft 14 extends linearly along the right-left direction of the vehicle. A rack 17 to be meshed with the pinion 16 is formed at an intermediate portion of the rack shaft 14 in the axial direction. The pinion 16 and the rack 17 constitute the rack-and-pinion mechanism, and convert rotation of the pinion shaft 13 into axial movement of the rack shaft 14. When the steering wheel 2 is operated (rotated), rotation of the steering wheel 2 is transferred to the pinion shaft 13 via the steering shaft 6 and the intermediate shaft 7. Then, rotation of the pinion shaft 13 is converted into axial movement of the rack shaft 14 by the pinion 16 and the rack 17. Consequently, the turning wheels 3 are turned.

The steering assist mechanism 5 includes an electric motor 18 that generates a steering assist force, and a speed reducer 19 that amplifies and transfers output torque from the electric motor 18 to the steering mechanism 4. In this embodiment, the electric motor 18 is a three-phase brushless motor. The speed reducer 19 is composed of a worm gear mechanism that includes a worm gear 20 and a worm wheel 21 meshed with the worm gear 20. The speed reducer 19 is housed in a gear housing 22. In the following, the speed reduction ratio (gear ratio) of the speed reducer 19 is represented as i_{ww}. The speed reduction ratio i_{ww} is defined as the ratio (θ_{wg}/θ_{ww}) of a worm gear angle θ_{wg}, which is the rotational angle of the worm gear 20, to a worm wheel angle θ_{ww}, which is the rotational angle of the worm wheel 21. The worm wheel angle θ_{ww} is an example of the "column angle" according to the present invention.

The worm gear 20 is rotationally driven by the electric motor 18. The worm wheel 21 is coupled so as to be rotatable together with the second shaft 9. The worm wheel 21 is rotationally driven by the worm gear 20. The electric motor 18 is driven in accordance with the state of steering by the driver or an instruction from an external control device such as an automatic drive system. The worm gear 20 is rotationally driven by the electric motor 18. Consequently, the worm wheel 21 is rotationally driven, and motor torque is applied to the steering shaft 6 to rotate the steering shaft 6 (second shaft 9). Then, rotation of the steering shaft 6 is transferred to the pinion shaft 13 via the intermediate shaft 7.

Rotation of the pinion shaft 13 is converted into axial movement of the rack shaft 14. Consequently, the turning wheels 3 are turned. That is, the worm gear 20 is rotationally driven by the electric motor 18, which enables steering assist by the electric motor 18. The rotational angle of a rotor of the electric motor 18 is detected by a rotational angle sensor 25 such as a resolver. In addition, a vehicle speed V is detected by a vehicle speed sensor 26. An output signal from the rotational angle sensor 25 and the vehicle speed V which is detected by the vehicle speed sensor 26 are input to the ECU 12. The electric motor 18 is controlled by the ECU 12.

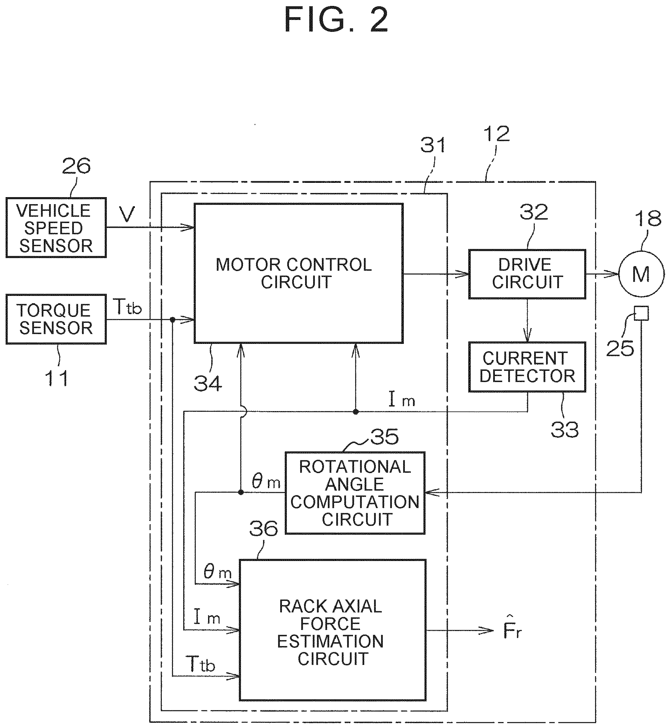

FIG. 2 is a block diagram illustrating the electric configuration of the ECU 12. The ECU 12 includes a microcomputer 31, a drive circuit (three-phase inverter circuit) 32 controlled by the microcomputer 31 so as to supply electric power to the electric motor 18, and a current detector 33 that detects a current (hereinafter referred to as a "motor current") that flows through the electric motor 18.

The microcomputer 31 includes a CPU and a memory (such as a ROM, a RAM, and a non-volatile memory), and executes a predetermined program to function as a plurality of function processing sections. The plurality of function processing sections include a motor control circuit 34, a rotational angle computation circuit 35, and a rack axial force estimation circuit 36. The rotational angle computation circuit 35 computes a rotor rotational angle θₘ of the electric motor 18 based on an output signal from the rotational angle sensor 25.

The motor control circuit 34 controls drive of the drive circuit 32 based on the vehicle speed V which is detected by the vehicle speed sensor 26, the torsion bar torque T_{tb} which is detected by the torque sensor 11, a motor current Iₘ detected by the current detector 33, and the rotor rotational angle θₘ which is computed by the rotational angle computation circuit 35, for example. Specifically, the motor control circuit 34 sets a current command value, which is a target value for the motor current Iₘ which flows through the electric motor 18, based on the torsion bar torque T_{tb} and the vehicle speed V. The current command value corresponds to a target value for a steering assist force (assist torque) that matches the vehicle state and the steering situation. Then, the motor control circuit 34 controls drive of the drive circuit 32 such that the motor current which is detected by the current detector 33 is brought closer to the current command value. Consequently, appropriate steering assist that matches the vehicle state and the steering situation is achieved. The current command value may be set in accordance with an instruction from an external control device such as an automatic drive system.

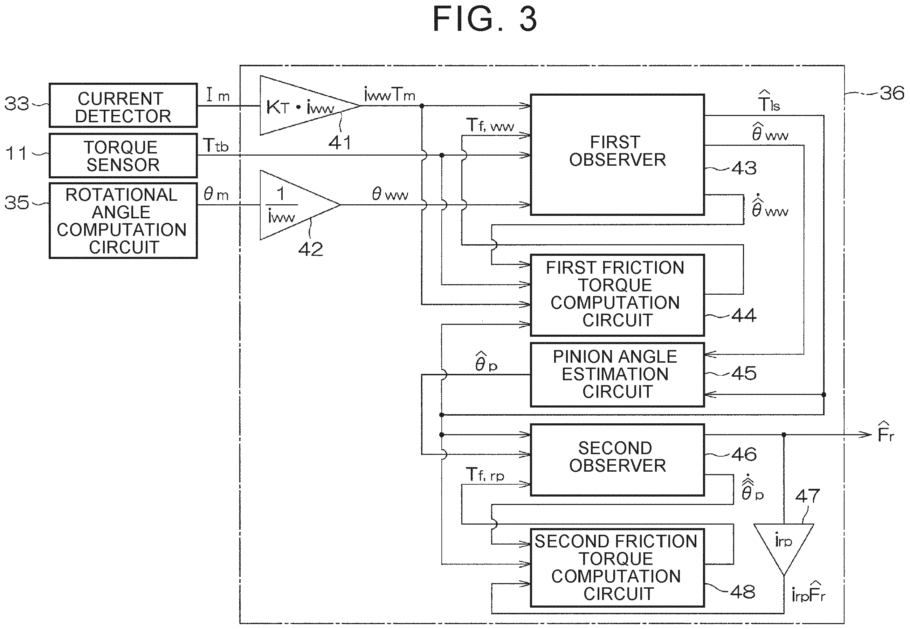

The rack axial force estimation circuit 36 estimates a rack axial force Fᵣ based on the motor rotational angle θₘ, the motor current Iₘ, and the torsion bar torque T_{tb}. Hereinafter, an estimated value of the rack axial force Fᵣ is represented as ^{∧}Fᵣ. FIG. 3 is a block diagram illustrating the electric configuration of the rack axial force estimation circuit 36. The rack axial force estimation circuit 36 includes a first multiplication circuit 41, a second multiplication circuit 42, a first observer 43, a first friction torque computation circuit 44, a pinion angle estimation circuit 45, a second observer 46, a third multiplication circuit 47, and a second friction torque computation circuit 48. The first observer 43 is an example of the "first load torque/column angle estimation circuit" according to the present invention. The second observer 46 is an example of the "second load torque estimation circuit" and the "axial force estimation circuit" according to the present invention.

The first multiplication circuit 41 computes torque (hereinafter referred to as "drive torque i_{ww}·Tₘ") that acts on the second shaft 9 (worm wheel 21) because of motor torque Tₘ (= Kₜ·Iₘ) of the electric motor 18 by multiplying the motor current Iₘ, which is detected by the current detector 33, by a torque constant K_{T} of the electric motor 18 and the speed reduction ratio i_{ww} of the speed reducer 19. The second multiplication circuit 42 converts the rotor rotational angle θₘ into the rotational angle (worm wheel angle θ_{ww}) of the second shaft 9 (worm wheel 21) by multiplying the rotor rotational angle θₘ by the reciprocal of the speed reduction ratio i_{ww} of the speed reducer 19.

The first observer 43 estimates lower shaft torque T₁ₛ, the worm wheel angle θ_{ww}, and a worm wheel angular speed dθ_{ww}/dt based on the drive torque i_{ww}·Tₘ, the torsion bar torque T_{tb}, the worm wheel angle θ_{ww}, and first friction torque T_{f,ww} computed by the first friction torque computation circuit 44. The lower shaft torque T₁ₛ is torque generated at a portion (lower shaft) of the second shaft 9 downstream of the worm wheel 21. The lower shaft torque T₁ₛ is an example of the "first load torque generated in the speed reducer" according to the present invention. In the following, estimated values of the lower shaft torque T₁ₛ, the worm wheel angle θ_{ww}, and the worm wheel angular speed dθ_{ww}/dt are represented as ^{∧}Tₗₛ, ^{∧}θ_{ww}, and d^{∧}θ_{ww}/dt, respectively. The first observer 43 will be discussed in detail later.

The first friction torque computation circuit 44 computes the first friction torque T_{f,ww}, which is generated in the speed reducer 19, based on the drive torque i_{ww}·Tₘ, the torsion bar torque T_{tb}, and the estimated worm wheel angular speed value d^{∧}θ_{ww}/dt which is estimated by the first observer 43. The first friction torque computation circuit 44 will be discussed in detail later. The pinion angle estimation circuit 45 estimates a pinion angle θₚ, which is the rotational angle of the pinion shaft 13, based on the lower shaft torque ^{∧}Tₗₛ and the estimated worm wheel angle value ^{∧}θ_{ww} which are estimated by the first observer 43. In the following, an estimated value of the pinion angle θₚ is represented as ^{∧}θₚ. The pinion angle estimation circuit 45 will be discussed in detail later.

The second observer 46 estimates a rack axial force Fᵣ, the pinion angle θₚ, and a pinion angular speed dθₚ/dt based on the lower shaft torque ^{∧}Tₗₛ which is estimated by the first observer 43, the pinion angle ^{∧}θₚ which is estimated by the pinion angle estimation circuit 45, and second friction torque T_{f,rp} computed by the second friction torque computation circuit 48. In the following, an estimated value of the rack axial force Fᵣ, an estimated value of the pinion angle θₚ, and an estimated value of the pinion angular speed dθₚ/dt obtained by the second observer 46 are represented as ^{∧}Fᵣ, ^{∧∧}θₚ, and d^{∧∧}θₚ/dt, respectively. The second observer 46 will be discussed in detail later.

The third multiplication circuit 47 computes torque (hereinafter referred to as a "torque-converted rack axial force iᵣₚ·^{∧}Fᵣ"), which acts on the second shaft 9 (worm wheel 21) because of the rack axial force ^{∧}Fᵣ, by multiplying the estimated rack axial force value ^{∧}Fᵣ by a gear ratio iᵣₚ of the rack-and-pinion mechanism 16, 17. The torque-converted rack axial force iᵣₚ·^{∧}Fᵣ is an example of the "second load torque generated in the rack-and-pinion mechanism" according to the present invention. As discussed later, the second observer 46 estimates the torque-converted rack axial force iᵣₚ·^{∧}Fᵣ, and estimates the rack axial force ∧Fᵣ from the torque-converted rack axial force iᵣₚ·^{∧}Fᵣ.

The second friction torque computation circuit 48 computes the second friction torque T_{f,rp}, which is generated in the rack-and-pinion mechanism 16, 17, based on the lower shaft torque ^T₁ₛ which is estimated by the first observer 43, the pinion angular speed d^{∧∧}θₚ/dt which is estimated by the second observer 46, and the torque-converted rack axial force iᵣₚ·^{∧}Fᵣ which is computed by the third multiplication circuit 47. The second friction torque computation circuit 48 will be discussed in detail later.

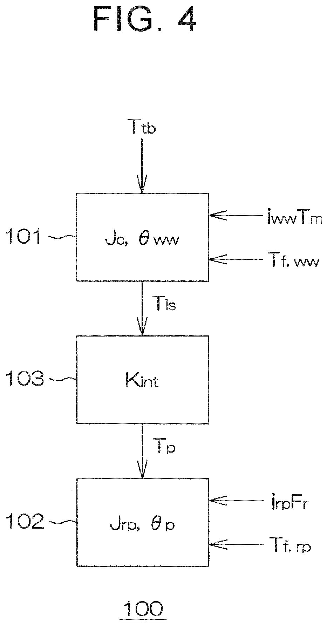

The first observer 43, the first friction torque computation circuit 44, the pinion angle estimation circuit 45, the second observer 46, and the second friction torque computation circuit 48 will be described in detail below. First, the first observer 43, the pinion angle estimation circuit 45, and the second observer 46 will be described. FIG. 4 is a schematic diagram illustrating an example of a two-inertia model of the electric power steering system which is used for the first observer 43, the pinion angle estimation circuit 45, and the second observer 46.

A two-inertia model 100 includes a column portion 101, a rack-and-pinion portion 102, and a spring 103 that couples the column portion 101 and the rack-and-pinion portion 102. The column portion 101 has a column inertia J_{c}. The column inertia J_{c} includes an inertia (worm wheel inertia) J_{ww} of the worm wheel 21, an inertia (worm gear inertia) J_{wg} of the worm gear 20, and an inertia (motor shaft inertia) Jₘₛ of a shaft of the electric motor 18.

The rack-and-pinion portion 102 has a rack-and-pinion inertia Jᵣₚ. The rack-and-pinion inertia Jᵣₚ includes an inertia (pinion inertia) Jₚ of the pinion shaft 13 and an inertia Jᵣ (= Mᵣ·Sᵣ²) of the rack shaft 14 as converted into that of the pinion shaft 13. Mᵣ is the mass of the rack shaft 14. Sᵣ is the stroke ratio of the rack-and-pinion mechanism 16, 17.

The spring 103 is composed of the intermediate shaft 7. The spring constant (modulus of transverse elasticity) of the spring 103 is represented as kᵢₙₜ. kᵢₙₜ is an example of the "rigidity coefficient of the intermediate shaft" according to the present invention. The column portion 101 receives the torsion bar torque T_{tb} from the steering wheel 2 via the torsion bar 10, and also receives the drive torque i_{ww}·Tₘ via the worm gear 20. The column portion 101 further receives the first friction torque T_{f,ww}, which is generated in the speed reducer 19, and the lower shaft torque T₁ₛ.

The rack-and-pinion portion 102 receives pinion shaft torque Tₚ, and also receives torque-converted rack axial force iᵣₚ·Fᵣ from the side of the turning wheels 3. The pinion shaft torque Tₚ is torque generated at the pinion shaft 13. In this embodiment, the pinion shaft torque Tₚ is equal to the lower shaft torque Tis. The rack-and-pinion portion 102 further receives the second friction torque T_{f,rp} which is generated in the rack-and-pinion mechanism 16, 17.

The equation of motion of the two-inertia model 100 is represented by the following formulas (1), (2), and (3). ${J}_{c} {{θ}^{¨}}_{ww} = {i}_{ww} {T}_{m} + {T}_{tb} + {T}_{f , ww} + {T}_{ls}$ (1) ${T}_{ls} = {k}_{int} \left({θ}_{ww}-{\hat{θ}}_{p}\right)$ (2) ${J}_{c} {\hat{{θ}^{¨}}}_{p} = {T}_{p} + {T}_{f . rp} + {i}_{rp} {F}_{r}$ (3)

The first observer 43 estimates the lower shaft torque T₁ₛ, the worm wheel angle θ_{ww}, and the worm wheel angular speed dθ_{ww}/dt based on the equation of motion in the formula (1). The lower shaft torque T₁ₛ is calculated by the following formula (4) which is based on the formula (1). ${T}_{ls} = {J}_{c} {{θ}^{¨}}_{ww} - {i}_{ww} {T}_{m} - {T}_{tb} - {T}_{f . ww}$ (4)

The state space model (extended state model) of the first observer 43 is represented by the following formula (5). ${ \begin{matrix}{\dot{x}}_{e 1} = {A}_{e 1} {x}_{e 1} + {B}_{e 1} {u}_{1} \\ {y}_{1} = {C}_{e 1} {x}_{e 1} + {D}_{1} {u}_{1}\end{matrix}$ (5)

In the formula (5), Xₑ₁ is a state variable vector, u₁ is a known input vector, y₁ is an output vector (measurement value), Aₑ₁ is a system matrix, Bₑ₁ is an input matrix, Cₑ₁ is a first output matrix, and D₁ is a direct matrix. xₑ₁, u₁, and y₁ are each represented by the following formula (6). ${x}_{e 1} = \left[\begin{matrix}{θ}_{ww} \\ {\dot{θ}}_{ww} \\ {T}_{ls}\end{matrix}\right] , { u}_{1} = {i}_{ww} {T}_{m} + {T}_{tb} + {T}_{f , ww} , { y}_{1} = {θ}_{ww}$ (6)

Aₑ₁, Bₑ₁, Cₑ₁, and D₁ are each represented by the following formula (7). ${A}_{e 1} = \left[\begin{matrix}0 & 1 & 0 \\ 0 & 0 & \frac{1}{{J}_{c}} \\ 0 & 0 & 0\end{matrix}\right] , { B}_{e 1} = \left[\begin{matrix}0 \\ \frac{1}{{J}_{c}} \\ 0\end{matrix}\right] , { C}_{e 1} = \left[\begin{matrix}1 & 0 & 0\end{matrix}\right] , { D}_{1} = 0$ (7)

The column inertia J_{c} in the formula (7) is represented by the following formula (8) using the worm wheel inertia J_{ww}, the worm gear inertia J_{wg}, and the motor shaft inertia Jₘₛ. ${J}_{c} = {J}_{ww} + {{i}_{ww}}^{2} \left({J}_{wg}+{J}_{ms}\right)$ (8)

The lower shaft torque T₁ₛ can be estimated by applying a Luenberger state observer to the extended state model, in the same manner as a normal state observer. The observer model is indicated by the following formula (9). ${ \begin{matrix}{\dot{\hat{x}}}_{e 1} = {A}_{e 1} {\hat{x}}_{e 1} + {B}_{e 1} {u}_{1} + {L}_{1} \left({y}_{1}-{\hat{y}}_{1}\right) \\ {\hat{y}}_{1} = {C}_{e 1} {\hat{x}}_{e 1} + {D}_{1} {u}_{1}\end{matrix}$ (9)

In the formula (9), ^{∧}xₑ₁ represents an estimated value of xₑ₁. L₁ is an observer gain matrix. ^y₁ represents an estimated value of y₁. The observer gain matrix L₁ is represented by the following formula (10). ${L}_{1} = \left[\begin{matrix}- 3 {ω}_{1} \\ 3 {{ω}^{2}}_{1} \\ - {J}_{c} {{ω}^{3}}_{1}\end{matrix}\right]$ (10)

In the formula (10), ω₁ [rad/sec] is a pole frequency. The pole frequency ω₁ is set in accordance with a load desired to be compensated for by the first observer 43. The estimated worm wheel angular speed value d^{∧}θ_{ww}/dt is represented by the following formula (11a) using the state variable vector ^{∧}xₑ₁. In the formula (11a), Ce₂ is a second output matrix, and is represented by the following formula (11b).

The estimated lower shaft torque value ^{∧}T₁ₛ is represented by the following formula (12a) using the state variable vector ^{∧}xₑₗ. In the formula (12a), Ce₃ is a third output matrix, and is represented by the following formula (12b). ${\dot{\hat{θ}}}_{ww} = {C}_{e 2} {\hat{x}}_{e 1}$ (11a) ${C}_{e 2} = \left[\begin{matrix}0 & 1 & 0\end{matrix}\right]$ (11b) ${\hat{T}}_{ls} = {C}_{e 3} {\hat{x}}_{e 1}$ (12a) ${C}_{e 3} = \left[\begin{matrix}0 & 0 & 1\end{matrix}\right]$ (12b)

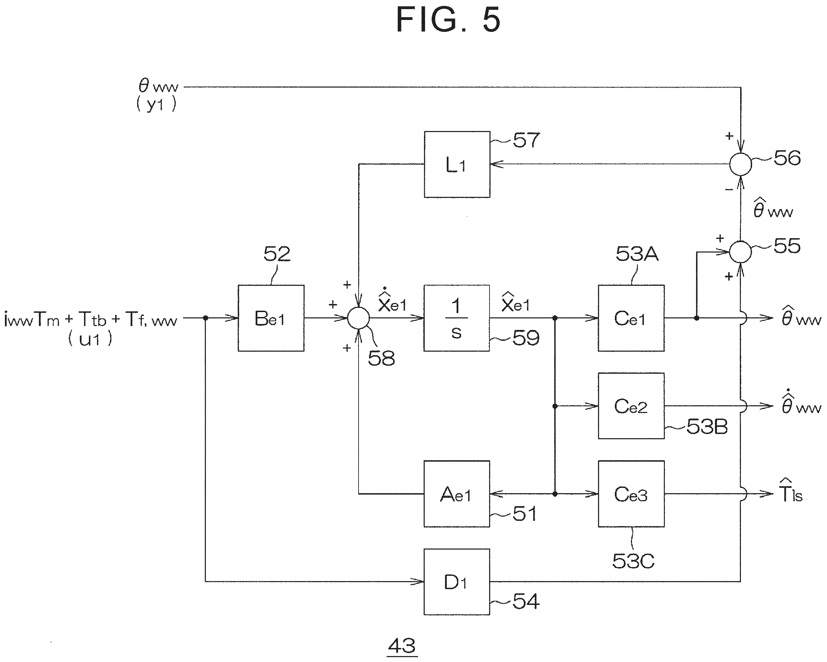

FIG. 5 is a block diagram illustrating the configuration of the first observer 43. The first observer 43 includes an Aₑ₁ multiplication circuit 51, a Bₑ₁ multiplication circuit 52, a Cₑ₁ multiplication circuit 53A, a Cₑ₂ multiplication circuit 53B, a Cₑ₃ multiplication circuit 53C, a D₁ multiplication circuit 54, a first addition circuit 55, a second addition circuit 56, an L₁ multiplication circuit 57, a third addition circuit 58, and an integration circuit 59. The sum (i_{ww}·Tₘ + T_{tb} + T_{f,ww}) of the drive torque i_{ww}·Tₘ, the torsion bar torque T_{tb}, and the first friction torque Tf,_{ww} corresponds to the input vector u₁ in the formula (9), and is provided to the Bₑ₁ multiplication circuit 52 and the D₁ multiplication circuit 54. The worm wheel angle θ_{ww} which is computed by the second multiplication circuit 42 in FIG. 3 corresponds to the output vector (measurement value) y₁ in the formula (9), and is provided to the second addition circuit 56.

The result of computation by the integration circuit 59 corresponds to the estimated worm wheel angle value ^{∧}θ_{ww,} the estimated worm wheel angular speed value ^{∧}dθ_{ww}/dt, and the estimated lower shaft torque value ^{∧}Tₗₛ which are included in an estimated value ^{∧}xₑ₁ of the state variable vector xₑ₁. The initial values of the estimated values ^{∧}θ_{ww}, ^{∧}dθ_{ww}/dt, and ^{∧}T₁ₛ at the start of computation are 0, for example. The Cₑ₁ multiplication circuit 53A computes Cₑ₁·^{∧}xₑ₁ in the formula (9) by multiplying ^{∧}xₑ₁, which is computed by the integration circuit 59, by Cₑ₁. In this embodiment, Cₑ₁·^{∧}xₑ₁ corresponds to the estimated worm wheel angle value ^{∧}θ_{ww.} The Cₑ₂ multiplication circuit 53B computes the estimated worm wheel angular speed value ^{∧}dθ_{ww}/dt (see the formula (11a)) by multiplying ^{∧}xₑ₁ by Cₑ₂. The Cₑ₃ multiplication circuit 53C computes the estimated lower shaft torque value ^{∧}T₁ₛ (see the formula (12a)) by multiplying ^{∧}xₑ₁ by Cₑ₃. The estimated values ^{∧}θ_{ww}, ^{∧}dθ_{ww}/dt, and ^{∧}Tₗₛ corresponds to the outputs from the first observer 43.

The Aₑ₁ multiplication circuit 51 computes Aₑ₁·^{∧}xₑ₁ in the formula (9) by multiplying ^{∧}xₑₗ, which is computed by the integration circuit 59, by Aₑ₁. The Bₑ₁ multiplication circuit 52 computes Bₑ₁·u₁ in the formula (9) by multiplying (i_{ww}·Tₘ + T_{tb} + T_{f,ww}) by Bₑ₁. The D₁ multiplication circuit 54 computes D₁·u₁ in the formula (9) by multiplying (i_{ww}·Tₘ + T_{tb} + T_{f,ww}) by D₁.

The first addition circuit 55 computes the estimated value ^y₁ of the output vector in the formula (9) by adding D₁·u₁, which is computed by the D₁ multiplication circuit 54, to Cₑ₁·^{∧}xₑ₁ (=^{∧}θ_{ww}), which is computed by the Cₑ₁ multiplication circuit 53A. In this embodiment, D₁ is equal to 0, and thus ^{∧}y₁ is equal to ^{∧}θ_{ww}. The second addition circuit 56 computes a difference (y₁ - ^{∧}y₁) by subtracting an estimated value ^{∧}y₁ (=^{∧}θ_{ww}) of the output vector, which is computed by the first addition circuit 55, from a measurement value y₁ (= θ_{ww)} of the output vector.

The L₁ multiplication circuit 57 computes L₁(y₁ - ^{∧}y₁) in the formula (9) by multiplying the result (y₁ - ^{∧}y₁) of computation by the second addition circuit 56 by the observer gain matrix L₁. The third addition circuit 58 computes d^{∧}xₑ₁/dt in the formula (9) by adding the result Aₑ₁·^{∧}xₑ₁ of computation by the Aₑ₁ multiplication circuit 51, the result Bₑ₁·u₁ of computation by the Bₑ₁ multiplication circuit 52, and the result L₁(y₁ - ^{∧}y₁) of computation by the L₁ multiplication circuit 57. The integration circuit 59 computes ^{∧}xₑ₁ in the formula (9) by integrating d^{∧}xₑ₁/dt.

The pinion angle estimation circuit 45 (see FIG. 3) computes the estimated pinion angle value ^{∧}θₚ based on the equation of motion in the formula (2). Specifically, the pinion angle estimation circuit 45 computes the estimated pinion angle value ^{∧}θₚ based on the following formula (13) using ^{∧}θ_{ww} and the estimated lower shaft torque value ^{∧}T₁ₛ which are estimated by the first observer 43. ${\hat{θ}}_{p} = {\hat{θ}}_{ww} - \frac{{\hat{T}}_{ls}}{{k}_{int}}$ (13)

The second observer 46 (see FIG. 3) estimates the rack axial force Fᵣ, the pinion angle θₚ, and the pinion angular speed dθ_{pw}/dt based on the equation of motion in the formula (3). The torque-converted value iᵣₚ·Fᵣ of the rack axial force Fᵣ is calculated by the following formula (14) which is based on the formula (3). ${i}_{rp} {F}_{r} = {J}_{c} {\hat{{θ}^{¨}}}_{p} - {T}_{p} - {T}_{f , rp}$ (14)

The state space model (extended state model) of the second observer 46 is represented by the following formula (15). ${ \begin{matrix}{\dot{x}}_{e 2} = {A}_{e 2} {x}_{e 2} + {B}_{e 2} {u}_{2} \\ {y}_{2} = {C}_{e 4} {x}_{e 2} + {D}_{2} {u}_{2}\end{matrix}$ (15)

In the formula (15), _{Xe2} is a state variable vector, _{U2} is a known input vector, y₂ is an output vector (measurement value), Aₑ₂ is a system matrix, Bₑ₂ is an input matrix, Cₑ₄ is a fourth output matrix, and D₂ is a direct matrix. Xₑ₂, U₂, and y₂ are each represented by the following formula (16). ${x}_{e 2} = \left[\begin{matrix}{\hat{θ}}_{p} \\ {\dot{\hat{θ}}}_{p} \\ {i}_{rp} {F}_{r}\end{matrix}\right] , { u}_{2} = {T}_{p} + {T}_{f , rp} , { y}_{2} = {\hat{\hat{θ}}}_{p}$ (16)

Aₑ₂, Bₑ₂, Cₑ₄, and D₂ are each represented by the following formula (17). ${A}_{e 2} = \left[\begin{matrix}0 & 1 & 0 \\ 0 & 0 & \frac{1}{{J}_{rp}} \\ 0 & 0 & 0\end{matrix}\right] , { B}_{e 2} = \left[\begin{matrix}0 \\ \frac{1}{{J}_{rp}} \\ 0\end{matrix}\right] , { C}_{e 4} = \left[\begin{matrix}1 & 0 & 0\end{matrix}\right] , { D}_{2} = 0$ (17)

The rack-and-pinion inertia Jᵣₚ in the formula (17) is represented by the following formula (18) using the rack mass Mᵣ, the stroke ratio Sᵣ of the rack-and-pinion mechanism 16, 17, and the pinion inertia Jₚ. ${J}_{rp} = {M}_{r} {{S}_{r}}^{2} + {J}_{p}$ (18)

The torque-converted rack axial force iᵣₚ·Fᵣ (rack shaft Fᵣ) can be estimated by applying a Luenberger state observer to the extended state model, in the same manner as a normal state observer. The observer model is indicated by the following formula (19). ${ \begin{matrix}{\dot{\hat{x}}}_{e 2} = {A}_{e 2} {\hat{x}}_{e 2} + {B}_{e 2} {u}_{2} + {L}_{2} \left({y}_{2}-{\hat{y}}_{2}\right) \\ {\hat{y}}_{2} = {C}_{e 4} {\hat{x}}_{e 2} + {D}_{2} {u}_{2}\end{matrix}$ (19)

In the formula (19), ^{∧}xₑ₂ represents an estimated value of xₑ₂. L₂ is an observer gain matrix. ^{∧}y₂ represents an estimated value of y₂. The observer gain matrix L₂ is represented by the following formula (20). ${L}_{2} = \left[\begin{matrix}- 3 {ω}_{2} \\ 3 {{ω}^{2}}_{2} \\ - {J}_{c} {{ω}^{3}}_{2}\end{matrix}\right]$ (20)

In the formula (20), ω₂ [rad/sec] is a pole frequency. The pole frequency ω₂ is set in accordance with a load desired to be compensated for by the second observer 46. The estimated value ^{∧∧}θₚ of the estimated pinion angular speed value ^{∧}θₚ is represented by the following formula (21a) using the state variable vector ^{∧}xₑ₂. In the formula (21a), Cₑ₅ is a fifth output matrix, and is represented by the following formula (21b). ${\dot{\hat{\hat{θ}}}}_{p} = {C}_{e 5} {\hat{x}}_{e 2}$ (21a) ${C}_{e 5} = \left[\begin{matrix}0 & 1 & 0\end{matrix}\right]$ (21b)

The rack axial force Fᵣ (estimated value) is represented by the following formula (22a) using the state variable vector ^{∧}xₑ₂. In the formula (22a), Cₑ₆ is a sixth output matrix, and is represented by the following formula (22b). ${\hat{F}}_{r} = {C}_{e 6} {\hat{x}}_{e 2}$ (22a) ${C}_{e 6} = \left[\begin{matrix}0 & 0 & \frac{1}{{i}_{rp}}\end{matrix}\right]$ (22b)

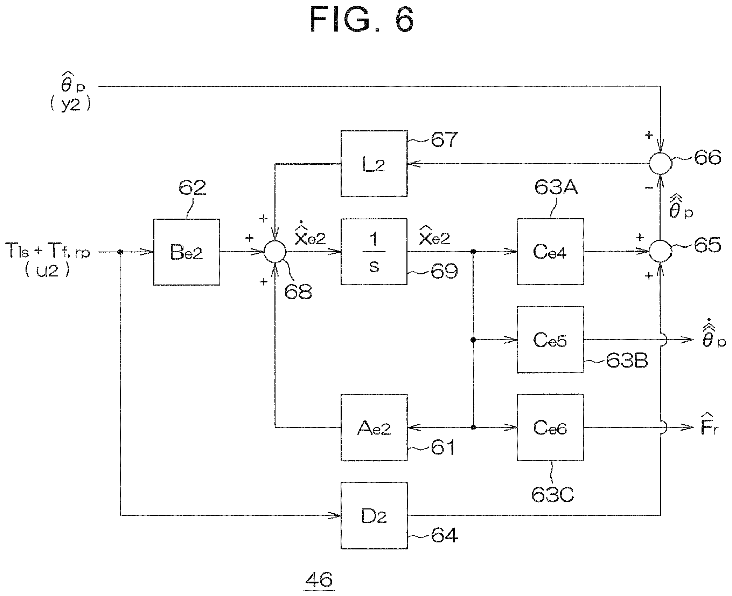

FIG. 6 is a block diagram illustrating the configuration of the second observer 46. The second observer 46 includes an Aₑ₂ multiplication circuit 61, a Bₑ₂ multiplication circuit 62, a Cₑ₄ multiplication circuit 63A, a Cₑ₅ multiplication circuit 63B, a Cₑ₆ multiplication circuit 63C, a D₂ multiplication circuit 64, a first addition circuit 65, a second addition circuit 66, an L₂ multiplication circuit 67, a third addition circuit 68, and an integration circuit 69. The sum (T₁ₛ + T_{f,rp-}) of the pinion shaft torque Tₚ (= T₁ₛ) and the second friction torque T_{f,rp} corresponds to the input vector U₂ in the formula (19), and is provided to the Bₑ₂ multiplication circuit 62 and the D₂ multiplication circuit 64. The estimated pinion angle value ^{∧}θₚ which is computed by the pinion angle estimation circuit 45 in FIG. 3 corresponds to the output vector (measurement value) y₂ in the formula (19), and is provided to the second addition circuit 66.

The result of computation by the integration circuit 69 corresponds to the estimated pinion angle value ^{∧∧}θₚ, the estimated pinion angular speed value ^{∧}dθₚ/dt, and the estimated torque-converted rack axial force value iᵣₚ·Fᵣ which are included in the estimated value ^{∧}xₑ₂ of the state variable vector xₑ₂. The initial values of the estimated values ^{∧∧}θₚ, ^{∧}dθₚ/dt, and iᵣₚ·^{∧}Fᵣ at the start of computation are 0, for example. The Cₑ₄ multiplication circuit 63A computes Cₑ₄·^{∧}xₑ₂ in the formula (19) by multiplying ^{∧}xₑ₂, which is computed by the integration circuit 69, by Cₑ₄. In this embodiment, Cₑ₄·^{∧}xₑ₂ corresponds to the estimated value ^{∧∧}θₚ of the estimated pinion angle value ^{∧}θₚ.

The Cₑ₅ multiplication circuit 63B computes the estimated pinion angular speed value d^{∧}θₚ/dt (see the formula (21a)) by multiplying ^{∧}xₑ₂ by Cₑ₅. The Cₑ₆ multiplication circuit 64C computes the estimated rack axial force value ^{∧}Fᵣ (see the formula (22a)) by multiplying ^{∧}xₑ₂ by Cₑ₆. The estimated pinion angular speed value d^{∧}θₚ/dt and the estimated rack axial force value ^Fᵣ correspond to the outputs from the second observer 46.

The Aₑ₂ multiplication circuit 61 computes Aₑ₂·^{∧}xₑ₂ in the formula (19) by multiplying ^{∧}xₑ₂, which is computed by the integration circuit 69, by Aₑ₂. The Bₑ₂ multiplication circuit 62 computes Bₑ₂·^{∧}u₂ in the formula (19) by multiplying (^{∧}T₁ₛ + T_{f,rp-}) by Bₑ₂. The D₂ multiplication circuit 64 computes D₂·u₂ in the formula (19) by multiplying (^{∧}Tₗₛ + T_{f,rp-}) by D₂.

The first addition circuit 65 computes the estimated value ^{∧}y₂ of the output vector in the formula (19) by adding D₂·u₂, which is computed by the D₂ multiplication circuit 64, to Cₑ₄·^{∧}xₑ₂ (= ^{∧}θₚ), which is computed by the Ce₄ multiplication circuit 63A. In this embodiment, D₂ is equal to 0, and thus ^{∧}y₂ is equal to ^{∧}θₚ. The second addition circuit 66 computes a difference (y₂ - ^{∧}y₂) by subtracting an estimated value ^{∧}y₂ (= ^{∧}θₚ) of the output vector, which is computed by the first addition circuit 65, from a measurement value y₂ (= θₚ) of the output vector.

The L₂ multiplication circuit 67 computes L₂(y₂ - ^{∧}y₂) in the formula (19) by multiplying the result (y₂ - ^{∧}y₂) of computation by the second addition circuit 66 by the observer gain matrix L₂. The third addition circuit 68 computes d^{∧}xₑ₂/dt in the formula (19) by adding the result Aₑ₂·^{∧}xₑ₂ of computation by the Aₑ₂ multiplication circuit 61, the result Bₑ₂·u₂ of computation by the Bₑ₂ multiplication circuit 62, and the result L₂(y₂ - ^{∧}y₂) of computation by the L₂ multiplication circuit 67. The integration circuit 69 computes ^{∧}xₑ₂ in the formula (19) by integrating d^{∧}xₑ₂/dt.

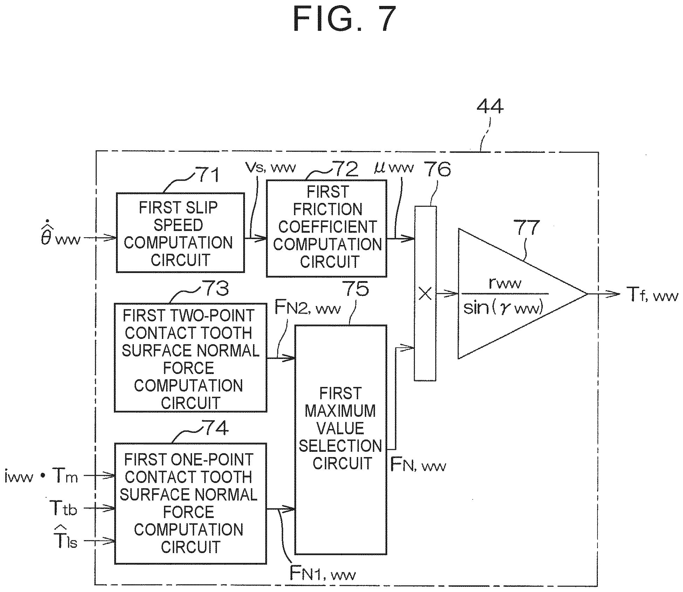

Next, the first friction torque computation circuit 44 will be described in detail. FIG. 7 is a block diagram illustrating the electric configuration of the first friction torque computation circuit 44. The first friction torque computation circuit 44 includes a first slip speed computation circuit 71, a first friction coefficient computation circuit 72, a first two-point contact tooth surface normal force computation circuit 73, a first one-point contact tooth surface normal force computation circuit 74, a first maximum value selection circuit 75, a first multiplication circuit 76, and a second multiplication circuit 77. The first two-point contact tooth surface normal force computation circuit 73, the first one-point contact tooth surface normal force computation circuit 74, and the first maximum value selection circuit 75 are an example of the "first force computation circuit" according to the present invention. In addition, the first two-point contact tooth surface normal force computation circuit 73 and the first one-point contact tooth surface normal force computation circuit 74 are an example of the "first two-point contact force computation circuit" and an example of the "first one-point contact force computation circuit", respectively, according to the present invention.

First, the first two-point contact tooth surface normal force computation circuit 73, the first one-point contact tooth surface normal force computation circuit 74, and the first maximum value selection circuit 75 will be described. The first two-point contact tooth surface normal force computation circuit 73 and the first one-point contact tooth surface normal force computation circuit 74 set a tooth surface normal force in a two-point contact state and a tooth surface normal force in a one-point contact state, respectively, using a model of meshing between a worm wheel and a worm gear.

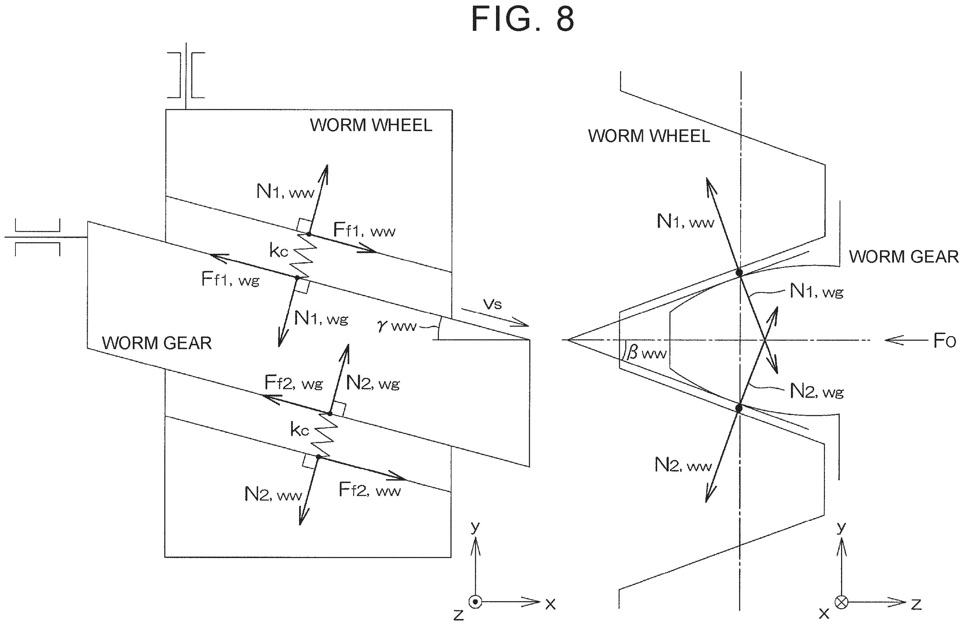

FIG. 8 is a schematic diagram illustrating a model of meshing between a worm wheel and a worm gear. In FIG. 8, the suffixes "ww" and "wg" indicate the worm wheel and the worm gear, respectively. The x-axis and the y-axis are tangents at the point of meshing on the pitch circle of the worm wheel and the worm gear. The z-axis is a direction along a radial direction that is common to such gears. Rotation of the worm wheel corresponds to movement in the y direction, and rotation of the worm gear corresponds to movement in the x direction. It is assumed that a pressure angle βWW of the worm wheel is always constant. Further, it is assumed that the friction torque of the tooth surfaces acts in the direction of a lead angle γ_{ww} of the worm wheel.

When the system is at a halt, a tooth of the worm gear meshed with the worm wheel is caused to contact the worm wheel at two, upper and lower, points by a preload F_{0,ww}. This state is referred to as a "two-point contact state". Interaction forces F_{c,ww} and F_{c,wg} between the worm wheel and the worm gear are composed of a tooth surface normal force N_{i,xx} (xx = ww, wg) and friction torque F_{fi,xx} generated at the two contact points i = 1, 2. The tooth surface normal force N_{i,xx} is generated by a material strain represented by a spring with a coefficient k_{c}.

When the amount of compression of the upper spring or the lower spring becomes zero, the contact point is lost. A state in which one of the two contact points is lost is referred to as a "one-point contact state". The friction torque T_{f,ww} of the gear tooth surface is represented by the following formula (23). ${T}_{f , ww} = \frac{{r}_{ww}}{sin \left({γ}_{ww}\right)} {µ}_{ww} {F}_{N , ww}$ (23)

In the formula (23), µ_{ww} is a friction coefficient, r_{ww} is the radius of the worm gear, and F_{N,ww} is the tooth surface normal force. A method of computing the tooth surface normal force F_{N,ww} will be described below. The following formula (24) represents the tooth surface contact force F_{c,ww} which is the contact force between the tooth surfaces without the preload F_{0,ww} taken into consideration. ${F}_{c , ww} = \frac{{J}_{ww} {i}_{ww} {T}_{m} - {{i}_{ww}}^{2} \left({J}_{wg}+{J}_{m}\right) \left({T}_{tb}+{T}_{ls}\right)}{{r}_{ww} cos \left({γ}_{ww}\right) cos \left({β}_{ww}\right) Jc}$ (24)

In the case where the contact state is the two-point contact state, the tooth surface contact force F_{c,ww} is a predetermined value F_{0,ww}/sin(β_{ww}) or less (F_{c,ww} ≤ F_{0,ww}/sin(β_{ww})). In this case, the tooth surface normal force F_{N,ww} is set based on the following formula (25a). In contrast, in the case where the contact state is the one-point contact state, the tooth surface contact force F_{c,ww} is more than the predetermined value F_{0,ww}/sin(β_{ww}) (F_{c,ww} > F_{0,ww}/sin(β_{ww})). In this case, the tooth surface normal force F_{N,ww} is set based on the following formula (25b). ${if F}_{c , ww} ≦ \frac{{F}_{0 , ww}}{sin \left({β}_{ww}\right)} , { F}_{N , ww} = \frac{{F}_{0 , ww}}{sin \left({β}_{ww}\right)}$ (25a) ${if F}_{c , ww} > \frac{{F}_{0 , ww}}{sin \left({β}_{ww}\right)} , { F}_{N , ww} = {F}_{c , ww}$ (25b)

It is known that the absolute value of the tooth surface normal force F_{N,WW} which is computed based on the formula (25a) is larger than the absolute value of the tooth surface normal force F_{N,WW} which is computed based on the formula (25b) in the case where the contact state is the two-point contact state, and that the opposite holds true in the case where the contact state is the one-point contact state. Thus, one of the tooth surface normal force F_{N,WW} which is computed based on the formula (25a) and the tooth surface normal force F_{N,ww} which is computed based on the formula (25b), the absolute value of which is the larger, corresponds to the tooth surface normal force F_{N,WW}.

Returning to FIG. 7, the first two-point contact tooth surface normal force computation circuit 73 sets the tooth surface normal force F_{N,ww} which is indicated by the formula (25a) as a tooth surface normal force F_{N2,ww} for the two-point contact state. The first one-point contact tooth surface normal force computation circuit 74 sets the tooth surface normal force F_{N,ww} which is indicated by the formula (25b) as a tooth surface normal force F_{N1,ww} for the one-point contact state. The first maximum value selection circuit 75 selects one of the tooth surface normal force F_{N1,ww} for the one-point contact state and the tooth surface normal force F_{N2,ww} for the two-point contact state, the absolute value of which is the larger, as the final tooth surface normal force F_{N,ww}, and provides the selected tooth surface normal force F_{N,ww} to the first multiplication circuit 76.

Next, the first slip speed computation circuit 71 and the first friction coefficient computation circuit 72 will be described. The first slip speed computation circuit 71 and the first friction coefficient computation circuit 72 estimate the friction coefficient µ_{ww} of the meshing portion between the worm wheel and the worm gear using a LuGre model. Computation of the friction coefficient µ_{ww} performed using the LuGre model is represented by the following formula (26) using a slip speed v_{s,ww} between the two objects and a state variable z of deflection of a brush. $\begin{matrix}{µ}_{ww} = {σ}_{0 , ww} z + {σ}_{1 , ww} \dot{z} + {σ}_{2 , ww} {v}_{s , ww} \\ \dot{z} = {v}_{s , ww} - {σ}_{0 , ww} \frac{\left|{v}_{s , ww}\right|}{g \left({v}_{s , ww}\right)} z \\ g \left({v}_{s , ww}\right) = {µ}_{c , ww} + \left({µ}_{ba , ww}-{µ}_{c , ww}\right) {e}^{- {\left(\frac{{v}_{s , ww}}{{v}_{stb , ww}}\right)}^{2}}\end{matrix}$ (26)

Here, µ_{c,ww} is a Coulomb friction coefficient. µ_{ba,ww} is a static friction coefficient. v_{stb,ww} is a Stribeck velocity coefficient. σ_{0,ww} is the rigidity coefficient of the brush_{.} σ_{1,ww} is the attenuation coefficient of the brush_{.} σ_{2,ww} is a viscous friction coefficient. These six parameters are obtained experimentally. The slip speed v_{s,ww} to be input to the LuGre model is represented by the following formula (27). ${v}_{s , ww} = \frac{{r}_{ww} {\dot{\hat{θ}}}_{ww}}{sin \left({γ}_{ww}\right)}$ (27)

The first slip speed computation circuit 71 computes the slip speed v_{s,ww} based on the formula (27) using the estimated worm wheel angular speed value ^{∧}dθ_{ww}/dt which is computed by the first observer 43 (see FIG. 3). A value dθ_{ww}/dt obtained by differentiating the worm wheel angle θ_{ww}, which is computed by the second multiplication circuit 42 (see FIG. 3), with respect to the time may be used in place of the estimated worm wheel angular speed value ^{∧}dθ_{ww}/dt. The first friction coefficient computation circuit 72 computes the friction coefficient µ_{ww} based on the formula (26) using the slip speed v_{s,ww} which is computed by the first slip speed computation circuit 71.

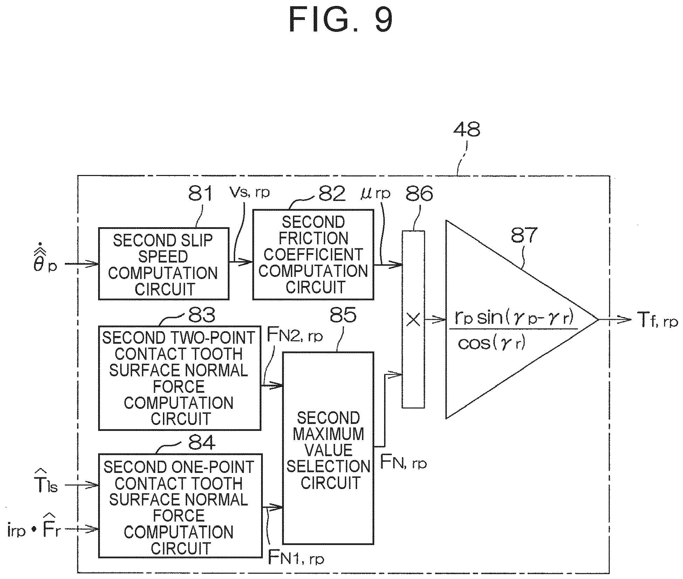

The first multiplication circuit 76 multiplies the final tooth surface normal force F_{N,ww} by the friction coefficient µ_{ww} The second multiplication circuit 77 computes the first friction torque T_{f,ww} by multiplying a synthesized friction force µ_{ww}·F_{n,ww}, which is the result of multiplication performed by the first multiplication circuit 76, by r_{ww}/sin(γ_{ww}). Next, the second friction torque computation circuit 48 will be described in detail. FIG. 9 is a block diagram illustrating the electric configuration of the second friction torque computation circuit 48.

The second friction torque computation circuit 48 includes a second slip speed computation circuit 81, a second friction coefficient computation circuit 82, a second two-point contact tooth surface normal force computation circuit 83, a second one-point contact tooth surface normal force computation circuit 84, a second maximum value selection circuit 85, a third multiplication circuit 86, and a fourth multiplication circuit 87. The second two-point contact tooth surface normal force computation circuit 83, the second one-point contact tooth surface normal force computation circuit 84, and the second maximum value selection circuit 85 are an example of the "second force computation circuit" according to the present invention. In addition, the second two-point contact tooth surface normal force computation circuit 83 and the second one-point contact tooth surface normal force computation circuit 84 are an example of the "second two-point contact force computation circuit" and an example of the "second one-point contact force computation circuit", respectively, according to the present invention.

First, the second two-point contact tooth surface normal force computation circuit 83, the second one-point contact tooth surface normal force computation circuit 84, and the second maximum value selection circuit 85 will be described. The second two-point contact tooth surface normal force computation circuit 83 and the second one-point contact tooth surface normal force computation circuit 84 set a tooth surface normal force with two-point contact and a tooth surface normal force with one-point contact, respectively, using a model of meshing between a rack and a pinion.

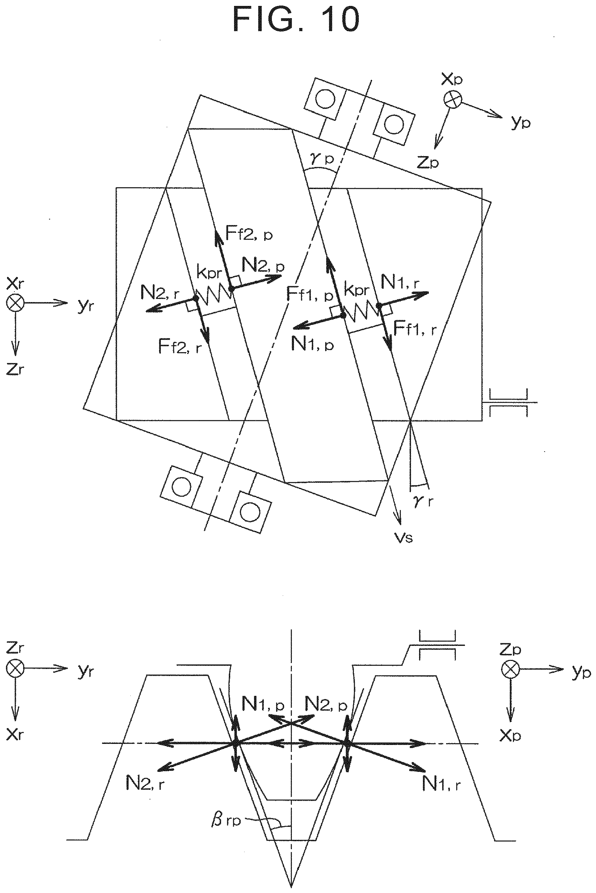

FIG. 10 is a schematic diagram illustrating a model of meshing between a rack and a pinion. In FIG. 10, the suffixes "r" and "p" indicate the rack and the pinion, respectively. In this model, the pinion translates in the direction (yₚ direction) of a tangent to the pitch circle, and the rack translates in the direction (yᵣ direction) of the rack shaft. When the system is at a halt, a tooth of the pinion meshed with the rack is caused to contact the rack at two, right and left, points by a preload F_{0,rp}. This state is referred to as a "two-point contact state".

Interaction forces F_{c,r} and F_{c,p} between the rack and the pinion are composed of a tooth surface normal force N_{i,xx} (xx = r, p) and friction torque F_{fi,xx} generated at the two contact points i = 1, 2. The tooth surface normal force N_{i,xx} is generated by a material strain represented by a spring with a coefficient kₚᵣ. When the amount of compression of the right spring or the left spring becomes zero, the contact point is lost. A state in which one of the two contact points is lost is referred to as a "one-point contact state".

The friction torque T_{f,rp} of the gear tooth surface is represented by the following formula (28). ${T}_{f , rp} = \frac{{r}_{p} sin \left({γ}_{p}-{γ}_{r}\right)}{cos \left({γ}_{r}\right)} {µ}_{rp} {F}_{N , rp}$ (28)

In the formula (28), rₚ is the radius of the pinion, γₚ is the helix angle of the pinion, γᵣ is the helix angle of the rack, µᵣₚ is a friction coefficient, and F_{N,rp} is a tooth surface normal force. The gear ratio iᵣₚ of the rack-and-pinion mechanism 16, 17 discussed earlier is represented as iᵣₚ = rₚcos(γₚ)/cos(γᵣ). A method of computing the tooth surface normal force F_{N,rp} will be described below.

The following formula (29) represents the tooth surface contact force F_{c,rp} which is the contact force between the tooth surfaces without the preload F_{0,rp} taken into consideration. ${F}_{c , rp} = \frac{{J}_{r} {T}_{p} - {J}_{p} {i}_{rp} {\hat{F}}_{r}}{{r}_{p} cos \left({γ}_{p}\right) cos \left({β}_{rp}\right) {J}_{rp}}$ (29)

In the formula (29), βᵣₚ is a pressure angle. The estimated lower shaft torque value ^{∧}Tₗₛ which is computed by the first observer 43 (see FIG. 3) is used as the pinion shaft torque Tₚ on the right side of the formula (29). The torque-converted rack axial force iᵣₚ·^{∧}Fᵣ which is computed by the third multiplication circuit 47 (see FIG. 3) is used as the torque-converted rack axial force iᵣₚ·^{∧}Fᵣ on the right side of the formula (29).

In the case where the contact state is the two-point contact state, the tooth surface contact force F_{c,rp} is a predetermined value F_{0,rp}/sin(βᵣₚ) or less (F_{c,rp} ≤ F_{0,rp}/sin(βᵣₚ)). βᵣₚ is a pressure angle. In this case, the tooth surface normal force F_{N},ᵣₚ is set based on the following formula (30a). In contrast, in the case where the contact state is the one-point contact state, the tooth surface contact force F_{c,rp} is more than the predetermined value F_{0,rp}/sin(βᵣₚ) (F_{c,rp} > F_{0,rp}/sin(βᵣₚ)). In this case, the tooth surface normal force F_{N},ᵣₚ is set based on the following formula (30b). ${if F}_{c , rp} ≦ \frac{{F}_{0 , rp}}{sin \left({β}_{rp}\right)} , { F}_{N , rp} = \frac{{F}_{0 , rp}}{sin \left({β}_{rp}\right)}$ (30a) ${if F}_{c , rp} > \frac{{F}_{0 , rp}}{sin \left({β}_{rp}\right)} , { F}_{N , rp} = {F}_{c , rp}$ (30b)

It is known that the absolute value of the tooth surface normal force F_{N,rp} which is computed based on the formula (30a) is larger than the absolute value of the tooth surface normal force F_{N,rp} which is computed based on the formula (30b) in the case where the contact state is the two-point contact state, and that the opposite holds true in the case where the contact state is the one-point contact state. Thus, one of the tooth surface normal force F_{N,rp} which is computed based on the formula (30a) and the tooth surface normal force F_{N,rp} which is computed based on the formula (30b), the absolute value of which is the larger, corresponds to the tooth surface normal force F_{N,rp}.

Returning to FIG. 9, the second two-point contact tooth surface normal force computation circuit 83 sets the tooth surface normal force F_{N,rp} which is indicated by the formula (30a) as a tooth surface normal force F_{N2,rp} for the two-point contact state. The second one-point contact tooth surface normal force computation circuit 84 sets the tooth surface normal force F_{N,rp} which is indicated by the formula (30b) as a tooth surface normal force F_{N1,rp} for the one-point contact state. The second maximum value selection circuit 85 selects one of the tooth surface normal force F_{N1,rp} for the one-point contact state and the tooth surface normal force F_{N2,rp} for the two-point contact state, the absolute value of which is the larger, as the final tooth surface normal force F_{N,rp}, and provides the selected tooth surface normal force F_{N,rp} to the third multiplication circuit 86.

Next, the second slip speed computation circuit 81 and the second friction coefficient computation circuit 82 will be described. The second slip speed computation circuit 81 and the second friction coefficient computation circuit 82 estimate the friction coefficient µᵣₚ of the meshing portion between the rack and the pinion using a LuGre model. Computation of the friction coefficient µᵣₚ performed using the LuGre model is represented by the following formula (31) using a slip speed v_{s,rp} between the two objects and a state variable z of deflection of a brush. $\begin{matrix}{µ}_{rp} = {σ}_{0 , rp} z + {σ}_{1 , rp} \dot{z} + {σ}_{2 , rp} {v}_{s , rp} \\ \dot{z} = {v}_{s , rp} - {σ}_{0 , rp} \frac{\left|{v}_{s , rp}\right|}{g \left({v}_{s , rp}\right)} z \\ g \left({v}_{s , rp}\right) = {µ}_{c , rp} + \left({µ}_{ba , rp}-{µ}_{c , rp}\right) {e}^{- {\left(\frac{{v}_{s , rp}}{{v}_{stb , rp}}\right)}^{2}}\end{matrix}$ (31)

Here, µ_{c,rp} is a Coulomb friction coefficient. µ_{ba,rp} is a static friction coefficient. V_{stb,rp} is a Stribeck velocity coefficient. σ_{0,rp} is the rigidity coefficient of the brush_{.} σ_{1,rp} is the attenuation coefficient of the brush. σ_{2,rp} is a viscous friction coefficient. These six parameters are obtained experimentally. The slip speed v_{s,rp} to be input to the LuGre model is represented by the following formula (32). ${v}_{s , rp} = {r}_{p} {\dot{\hat{\hat{θ}}}}_{p} \frac{sin \left({γ}_{p}-{γ}_{r}\right)}{cos \left({γ}_{r}\right)}$ (32)

The second slip speed computation circuit 81 computes the slip speed v_{s,rp} based on the formula (32) using the estimated pinion angular speed value ^{∧}dθₚ/dt which is computed by the second observer 46 (see FIG. 3). A value d^{∧}θₚ/dt obtained by differentiating the estimated pinion angle value ^{∧}θₚ, which is computed by the pinion angle estimation circuit 45 (see FIG. 3), with respect to the time may be used in place of the estimated pinion angular speed value d^{∧}θₚ/dt. The second friction coefficient computation circuit 82 computes the friction coefficient µᵣₚ based on the formula (31) using the slip speed v_{s,rp} which is computed by the second slip speed computation circuit 81.

The third multiplication circuit 86 multiplies the final tooth surface normal force F_{N,rp} by the friction coefficient µᵣₚ. The fourth multiplication circuit 87 computes the second friction torque T_{f,rp} by multiplying a synthesized friction force µᵣₚ·F_{N,rp}, which is the result of multiplication performed by the third multiplication circuit 86, by rₚsin(γₚ -γᵣ)/cos(yᵣ). In the present embodiment, the first friction torque computation circuit 44 is provided, and thus the first friction torque T_{f,ww} which is generated in the speed reducer 19 can be estimated with precision. In the present embodiment, in addition, the second friction torque computation circuit 48 is provided, and thus the second friction torque T_{f,rp} which is generated in the rack-and-pinion mechanism 16, 17 can be estimated with precision. Consequently, the rack axial force Fᵣ can be estimated with precision.

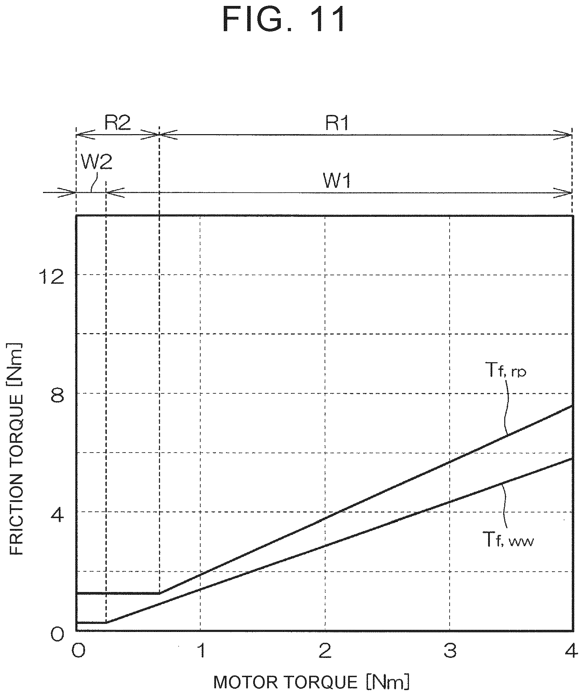

A second friction torque computation circuit according to a modification will be described below. The basic idea of a second friction torque computation circuit 48A according to the modification will be described. FIG. 11 is a graph indicating the first friction torque T_{f,ww}, which is computed by the first friction torque computation circuit 44 illustrated in FIG. 7, and the second friction torque T_{f,rp}, which is computed by the second friction torque computation circuit 48 illustrated in FIG. 9, with the horizontal axis indicating motor torque and with the vertical axis indicating friction torque. In FIG. 11, W1 indicates the range of the first friction torque T_{f,ww} in the one-point contact state, W2 indicates the range of the first friction torque T_{f,ww} in the two-point contact state, R1 indicates the range of the second friction torque T_{f,rp} in the one-point contact state, and R2 indicates the range of the second friction torque T_{f,rp} in the two-point contact state.

It is seen from FIG. 11 that there is a correlation between the first friction torque T_{f,ww} in the one-point contact state and the second friction torque T_{f,rp} in the one-point contact state, and that there is a correlation between the first friction torque T_{f,ww} in the two-point contact state and the second friction torque T_{f,rp} in the two-point contact state. That is, it is seen that there is a correlation between the first friction torque T_{f,ww} and the second friction torque T_{f,rp}.

Thus, the second friction torque T_{f,rp} can be estimated from the first friction torque T_{f,ww} utilizing the correlation. In the case where the second friction torque T_{f,rp} is estimated from the first friction torque T_{f,ww}, however, an error may be caused in the estimation of the second friction torque T_{f,rp} because of a phase difference between the speed reducer 19 and the rack-and-pinion mechanism 16, 17 due to the rigidity of the intermediate shaft 7 which is provided therebetween.

For example, the direction of the second friction torque T_{f,rp} may not be switched because of the rigidity of the intermediate shaft 7 even if the direction of the first friction torque T_{f,ww} is switched when the steering direction is switched. In such a case, an error may be caused in the second friction torque T_{f,rp} which is estimated from the first friction torque T_{f,ww}. Thus, the second friction torque computation circuit 48A according to the modification computes the friction coefficient µ_{rp,} which reflects the direction of friction that acts on the rack-and-pinion mechanism 16, 17, in the same manner as the second friction torque computation circuit 48 in FIG. 9, and estimates only a tooth surface normal force that acts on the rack-and-pinion mechanism 16, 17 from a tooth surface normal force that acts on the speed reducer 19. Then, the second friction torque computation circuit 48A computes the second friction torque T_{f},ᵣₚ by multiplying the thus computed or estimated friction coefficient µᵣₚ and tooth surface normal force and multiplying the result of the multiplication by a predetermined value.

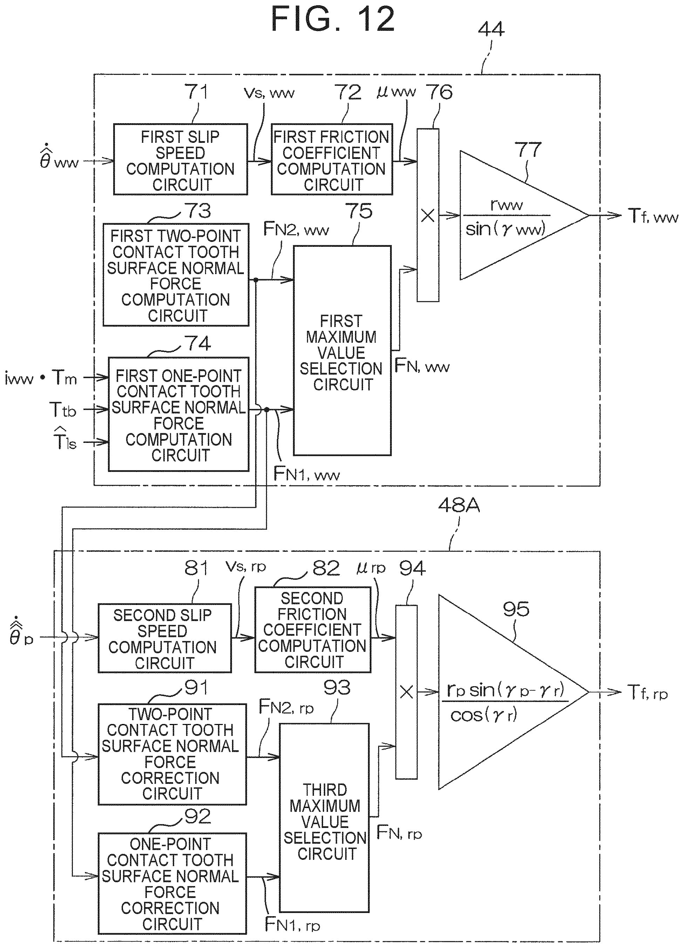

FIG. 12 is a block diagram illustrating the configuration of the first friction torque computation circuit 44 and the second friction torque computation circuit 48A according to the modification. The first friction torque computation circuit 44 is the same as the first friction torque computation circuit 44 in FIG. 7. The second friction torque computation circuit 48A includes a second slip speed computation circuit 81, a second friction coefficient computation circuit 82, a two-point contact tooth surface normal force correction circuit 91, a one-point contact tooth surface normal force correction circuit 92, a third maximum value selection circuit 93, a fifth multiplication circuit 94, and a sixth multiplication circuit 95.

The second slip speed computation circuit 81 and the second friction coefficient computation circuit 82 are the same as the second slip speed computation circuit 81 and the second friction coefficient computation circuit 82, respectively, in FIG. 9, and thus are not described. The second slip speed computation circuit 81 and the second friction coefficient computation circuit 82 according to the modification are an example of the "third slip speed computation circuit" and an example of the "third friction coefficient computation circuit", respectively, according to the present invention. The two-point contact tooth surface normal force correction circuit 91 computes the tooth surface normal force F_{N2,rp} for the two-point contact state in the rack-and-pinion mechanism 16, 17 by multiplying the tooth surface normal force F_{N2,ww}, which is computed by the first two-point contact tooth surface normal force computation circuit 73, by a predetermined two-point contact correction coefficient. The tooth surface normal force F_{N2,rp} is an example of the "third two-point contact tooth surface normal force" according to the present invention.

The one-point contact tooth surface normal force correction circuit 92 computes the tooth surface normal force F_{N1,rp} for the one-point contact state in the rack-and-pinion mechanism 16, 17 by multiplying the tooth surface normal force F_{N1,ww,} which is computed by the first one-point contact tooth surface normal force computation circuit 74, by a predetermined one-point contact correction coefficient. The tooth surface normal force F_{N1,rp} is an example of the "third one-point contact tooth surface normal force" according to the present invention.

The third maximum value selection circuit 93 selects one of the tooth surface normal force F_{N2,rp} for the two-point contact state and the tooth surface normal force F_{N1,rp} for the one-point contact state, the absolute value of which is the larger, as the final tooth surface normal force F_{N,rp}, and provides the selected tooth surface normal force F_{N,rp} to the fifth multiplication circuit 94. The final tooth surface normal force F_{N,rp} is an example of the "third tooth surface normal force" according to the present invention. The fifth multiplication circuit 94 multiplies the final tooth surface normal force F_{N,rp} by the friction coefficient µᵣₚ. The sixth multiplication circuit 95 computes the second friction torque T_{f,rp} by multiplying a synthesized friction force µᵣₚ·F_{N,rp}, which is the result of multiplication performed by the fifth multiplication circuit 94, by rₚsin(γₚ-_{γr})/cos(γᵣ).

In this modification, the tooth surface normal force F_{N,rp} of the rack-and-pinion mechanism 16, 17 is computed based on the tooth surface normal force F_{N2,ww} of the speed reducer 19 for the two-point contact state, the tooth surface normal force F_{N1,ww} of the speed reducer 19 for the one-point contact state, and a two-point contact correction coefficient and a one-point contact correction coefficient set in advance. Therefore, the tooth surface normal force F_{N,rp} of the rack-and-pinion mechanism 16, 17 is computed easily compared to a case where the tooth surface normal force F_{N,ww} of the speed reducer 19 and the tooth surface normal force F_{N,rp} of the rack-and-pinion mechanism 16, 17 are computed separately using respective meshing models.

In this modification, the tooth surface normal force F_{N,rp} of the rack-and-pinion mechanism 16, 17 is estimated from the tooth surface normal force of the speed reducer 19, and the friction coefficient µᵣₚ which is computed from the slip speed v_{s,rp} which matches the rack-and-pinion mechanism 16, 17 is used as the friction coefficient µᵣₚ. Thus, also in this modification, the occurrence of an error in the estimation of the second friction torque T_{f,rp} from a phase difference between the two mechanisms due to the rigidity of the intermediate shaft 7 during switching of the steering direction etc. can be avoided. Consequently, the second friction torque T_{f,rp} can be estimated with precision as with the second friction torque computation circuit 48 in FIG. 9, and thus the rack axial force Fᵣ can be estimated with precision.

The present invention can be subjected to a variety of design changes without departing from the scope of the claims.

## Claims

1. A steering device (1) **characterized by** comprising:
a steering member (2);
a rack shaft (14) configured to turn turning wheels (3) through axial movement of the rack shaft (14);
a steering torque detector (11) configured to detect steering torque that acts on the steering member (2);
a column shaft (9) coupled to the steering member (2);
a pinion shaft (13) that constitutes a rack-and-pinion mechanism together with the rack shaft (14);
an intermediate shaft (7) that couples the column shaft (9) and the pinion shaft (13) to each other;
an electric motor (18);
a speed reducer (19) configured to output rotation of the electric motor (18) to the column shaft (9) at a reduced rotational speed;
an angle detector (25) configured to detect a rotational angle of the electric motor (18);
a current detector (33) configured to detect a motor current that flows through the electric motor (18); and
an electronic control unit (12) configured to control the electric motor (18), wherein:
the electronic control unit (12) includes a first friction torque computation circuit (44), a second friction torque computation circuit (48; 48A), a first load torque-column angle estimation circuit (43), a pinion angle estimation circuit (45), a second load torque estimation circuit, and an axial force estimation circuit;
the first friction torque computation circuit (44) is configured to compute first friction torque that is friction torque generated in the speed reducer (19);
the second friction torque computation circuit (48; 48A) is configured to compute second friction torque that is friction torque generated in the rack-and-pinion mechanism;
the first load torque-column angle estimation circuit (43) is configured to estimate first load torque that is load torque generated in the speed reducer(19) and a column angle that is a rotational angle of the column shaft, based on the steering torque, the motor current, the first friction torque, and the rotational angle of the electric motor;
the pinion angle estimation circuit (45) is configured to estimate an estimated pinion angle value that is an estimated value of a rotational angle of the pinion shaft (13), based on the first load torque, an estimated value of the column angle, and a rigidity coefficient of the intermediate shaft (7);
the second load torque estimation circuit is configured to estimate second load torque that is load torque generated in the rack-and-pinion mechanism, based on the first load torque, the second friction torque, and the estimated pinion angle value; and
the axial force estimation circuit is configured to estimate an axial force that acts on the rack shaft (14), based on the second load torque.

2. The steering device (1) according to claim 1, **characterized in that**
the first friction torque computation circuit (44) includes: a first slip speed computation circuit (71) configured to compute a first slip speed that is a slip speed of the speed reducer (19); a first friction coefficient computation circuit (72) configured to compute a first friction coefficient that is a friction coefficient of the speed reducer (19), based on the first slip speed; a first force computation circuit configured to compute a first tooth surface normal force that is a tooth surface normal force of the speed reducer(19); and a first torque computation circuit configured to compute the first friction torque using the first friction coefficient and the first tooth surface normal force.

3. The steering device (1) according to claim 2, **characterized in that**
the first force computation circuit includes: a first one-point contact force computation circuit (74) configured to compute a first one-point contact tooth surface normal force that is a tooth surface normal force of the speed reducer (19) in a one-point contact state, based on the motor current, the steering torque, and the column angle; a first two-point contact force computation circuit (73) configured to compute a first two-point contact tooth surface normal force that is a tooth surface normal force of the speed reducer (19) in a two-point contact state; and a first maximum value selection circuit (75) configured to select one of the first one-point contact tooth surface normal force and the first two-point contact tooth surface normal force, an absolute value of which is larger, as the first tooth surface normal force.

4. The steering device (1) according to any one of claims 1 to 3, **characterized in that**
the second friction torque computation circuit (48) includes: a second slip speed computation circuit (81) configured to compute a second slip speed that is a slip speed of the rack-and-pinion mechanism; a second friction coefficient computation circuit (82) configured to compute a second friction coefficient that is a friction coefficient of the rack-and-pinion mechanism, based on the second slip speed; a second force computation circuit configured to compute a second tooth surface normal force that is a tooth surface normal force of the rack-and-pinion mechanism; and a second torque computation circuit configured to compute the second friction torque using the second friction coefficient and the second tooth surface normal force.

5. The steering device (1) according to claim 4, **characterized in that**
the second force computation circuit includes: a second one-point contact force computation circuit (84) configured to compute a second one-point contact tooth surface normal force that is a tooth surface normal force of the rack-and-pinion mechanism in a one-point contact state, based on the first load torque and the second load torque; a second two-point contact force computation circuit (83) configured to compute a second two-point contact tooth surface normal force that is a tooth surface normal force of the rack-and-pinion mechanism in a two-point contact state; and a second maximum value selection circuit (85) configured to select one of the second one-point contact tooth surface normal force and the second two-point contact tooth surface normal force, an absolute value of which is larger, as the second tooth surface normal force.

6. The steering device (1) according to claim 2, **characterized in that**
the second friction torque computation circuit (48) includes: a second slip speed computation circuit (81) configured to compute a second slip speed that is a slip speed of the rack-and-pinion mechanism; a second friction coefficient computation circuit (82) configured to compute a second friction coefficient that is a friction coefficient of the rack-and-pinion mechanism, based on the second slip speed; a second force computation circuit (83) configured to compute a second tooth surface normal force that is a tooth surface normal force of the rack-and-pinion mechanism, based on the first tooth surface normal force; and a second torque computation circuit configured to compute the second friction torque using the second friction coefficient and the second tooth surface normal force.

7. The steering device (1) according to claim 3, **characterized in that**
the second friction torque computation circuit (48A) includes: a third slip speed computation circuit configured to compute a third slip speed that is a slip speed of the rack-and-pinion mechanism; a friction coefficient computation circuit configured to compute a third friction coefficient that is a friction coefficient of the rack-and-pinion mechanism, based on the third slip speed; a one-point contact force correction circuit (92) configured to compute a third one-point contact tooth surface normal force that is a tooth surface normal force of the rack-and-pinion mechanism in a one-point contact state, by correcting the first one-point contact tooth surface normal force; a two-point contact force correction circuit (91) configured to compute a third two-point contact tooth surface normal force that is a tooth surface normal force of the rack-and-pinion mechanism in a two-point contact state, by correcting the first two-point contact tooth surface normal force; a third maximum value selection circuit (93) configured to select one of the third one-point contact tooth surface normal force and the third two-point contact tooth surface normal force, an absolute value of which is larger, as a third tooth surface normal force that is a tooth surface normal force of the rack-and-pinion mechanism; and a third torque computation circuit configured to compute the second friction torque using the third friction coefficient and the third tooth surface normal force.
